# EUROPEAN PATENT APPLICATION

(11) **EP 4 113 544 A1**
(43) Date of publication of application: **04.01.2023**
(21) Application number: 21761557.4
(22) Date of filing: 22.02.2021
(51) Int. Cl.: H01F 1/057, H01F 41/02

(54) **NEODYMIUM-IRON-BORON MAGNET MATERIAL, RAW MATERIAL COMPOSITION, PREPARATION METHOD THEREFOR AND USE THEREOF**

(30) Priority: 26.02.2020 CN 202010121472
(71) Applicant: Fujian Changting Golden Dragon Rare-Earth Co., Ltd., Fujian 366300 (CN)
(72) Inventor: LUO, Ying, Xiamen, Fujian 361000 (CN); LIAO, Zongbo, Xiamen, Fujian 361000 (CN); LAN, Qin, Xiamen, Fujian 361000 (CN); HUANG, Jiaying, Xiamen, Fujian 361000 (CN); SHI, Dawei, Xiamen, Fujian 361000 (CN); LIN, Yulin, Xiamen, Fujian 361000 (CN); XIE, Juhua, Xiamen, Fujian 361000 (CN); LONG, Yanqing, Longyan, Fujian 366300 (CN)
(74) Representative: karo IP
(86) International application number: PCT/CN2021/077172
(87) International publication number: WO 2021/169887

(57) **Abstract**

Disclosed are a neodymium-iron-boron magnet material, a raw material composition, a preparation method therefor and a use thereof. The raw material composition of the neodymium-iron-boron magnet material comprises the following components in weight content: R: 28-33%; R being rare earth elements, and comprising R1 and R2, R1 being a rare earth element added during smelting, R1 comprising Nd and Dy, R2 being a rare earth element added during grain boundary diffusion, R2 comprising Tb, and the content of R2 being 0.2-1%; M: ≤0.4% but not 0, M being one or more elements among Bi, Sn, Zn, Ga, In, Au and Pb; Cu: ≤0.15% but not 0; B: 0.9-1.1%; Fe: 60-70%; but not containing Co. The neodymium-iron-boron magnet material under the condition of adding a small amount of heavy rare earth elements and not adding cobalt, can still have a relatively high coercivity and remanence, and excellent thermal stability.

## Description

### TECHNICAL FIELD

The present disclosure relates to a neodymium-iron-boron magnet material, a raw material composition, a preparation method therefor and a use thereof.

### BACKGROUND

The Nd-Fe-B permanent magnet material is based on Nd₂Fe₁₄B compound, and has the advantages of high magnetic property, small coefficient of thermal expansion, easy processing, low price and so on, and since its inception, it has grown at an average annual rate of 20-30% and has become the most widely used permanent magnet material. According to the preparation method, Nd-Fe-B permanent magnets can be divided into three types: sintered, bonded and hot pressed, wherein sintered magnets account for more than 80% of the total output and are the most widely used.

With the continuous optimization of the preparation process and the magnet composition, the maximum magnetic energy product of the sintered Nd-Fe-B magnet is close to the theoretical value. With the vigorous development of emerging industries such as wind power generation, hybrid electric vehicles and inverter air conditioners in recent years, there is an increasing demand for high-performance Nd-Fe-B magnets, and at the same time, higher requirements on the performance of the magnet for applications in these high temperature fields have been put forward, especially the coercivity.

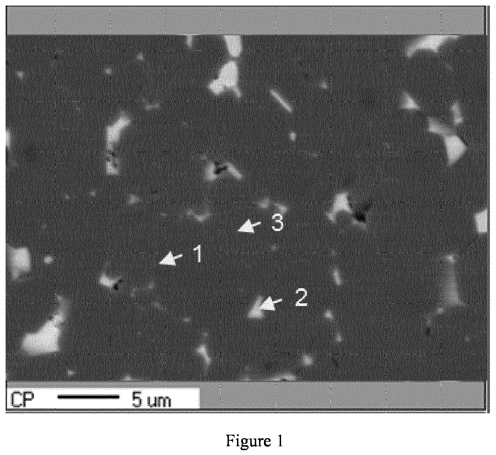

US patent application US5645651A shows through Figure 1 that the Curie temperature of Nd-Fe-B magnets will increase with the increase of the content of Co, in addition, through the comparison of sample 9 and sample 2, Table 1 shows that, compared with the solution without Co, the addition of 20at% of Co in Nd-Fe-B magnets, can improve the coercivity while maintaining that the remanence approximately unchanged. Therefore, Co is widely used in high-tech fields such as neodymium-iron-boron rare earth permanent magnets, samarium-cobalt rare earth permanent magnets, and batteries, but Co is also an important strategic resource and is expensive.

Chinese patent CN110571007A discloses a rare earth permanent magnet material, which simultaneously adds heavy rare earth elements of 1.5% or more and cobalt element of 0.8% or more, and finally obtains a Nd-Fe-B magnet with better coercivity and magnetic properties.

To sum up, the neodymium-iron-boron magnet material with better magnetic properties in the prior art require the addition of a large amount of heavy rare earth elements and cobalt elements, which is expensive, a technical solution that can still reach a considerable level or even better under the premise of adding a small amount of heavy rare earth elements and even not adding cobalt element needs to be developed.

### CONTENT OF THE PRESENT INVENTION

The technical problem to be solved in the prior art is for overcoming the defect that a large amount of cobalt element or heavy rare earth elements needs to be added to improve the magnetic properties of the neodymium-iron-boron magnet material (coercivity, remanence and thermal stability), but it cost a lot, and a neodymium-iron-boron magnet material, a raw material composition, a preparation method therefor and a use thereof are provided. The neodymium-iron-boron magnet material in the present disclosure can still have high coercivity, remanence and good thermal stability under the condition of adding a small amount of heavy rare earth elements and not adding cobalt element.

The present disclosure solves the above-mentioned technical problems through the following technical solutions.

The present disclosure provides a raw material composition of neodymium-iron-boron magnet material, comprising the following components by mass content:
R: 28-33%; R being rare earth element comprising R1 and R2, R1 being rare earth element added during smelting, and R1 comprising Nd and Dy; R2 being rare earth element added during grain boundary diffusion, R2 comprising Tb, and the content of R2 is 0.2-1%;
M: ≤0.4%, but not 0, M being one or more of Bi, Sn, Zn, Ga, In, Au and Pb;
Cu: ≤0.15%, but not 0;
B: 0.9-1.1%;
Fe: 60-70%;
the raw material composition does not comprise Co; the percentage is the mass percentage of the mass of each component relative to the total mass of the raw material composition.

In the present disclosure, the content of R is preferably 29.5-32.6%, such as 29.58%, 29.75%, 29.8%, 30.6%, 30.7%, 30.9%, 30.95%, 31.35% or 32.6%, more preferably 29.5-31%, and the percentage is the mass percentage relative to the total mass of the raw material composition.

In the present disclosure, in R1 of the raw material composition, the content of Nd may be conventional in the field, preferably 28.5-32.5%, such as 28.6%, 29.9%, 30.4% or 32.1%, more preferably 28.5-31%, and the percentage is the mass percentage relative to the total mass of the raw material composition.

In the present disclosure, in R1, the content of Dy is preferably 0.3% or less, but not 0, such as 0.05%, 0.08%, 0.1% or 0.3%, more preferably 0.05-0.2%, and the percentage is the mass percentage relative to the total mass of the raw material composition.

In the present disclosure, R1 may also comprise other conventional rare earth elements, such as one or more of Pr, Ho, Tb, Gd and Y.

Herein, when R1 comprises Pr, the addition form of Pr may be conventional in the field, for example in the form of PrNd, or in the form of a mixture of pure Pr and pure Nd, or in a combination of "a mixture of PrNd, pure Pr and pure Nd". When added in the form of PrNd, Pr:Nd is preferably 25:75 or 20:80; when added in a mixture of pure Pr and Nd , or, when added in a combination of a mixture of PrNd, pure Pr and Nd, the content of Pr is preferably 0.1-2%, such as 0.2%, and the percentage is the mass percentage relative to the total mass of the raw material composition. In the present disclosure, the pure Pr or pure Nd generally means that the purity thereof is 99.5% or more.

Herein, when R1 comprises Ho, the content of Ho is preferably 0.1-0.2%, and the percentage is the mass percentage relative to the total mass of the raw material composition.

Herein, when R1 comprises Gd, the content of Gd is preferably 0.1-0.2%, and the percentage is the mass percentage relative to the total mass of the raw material composition.

Herein, when R1 comprises Y, the content of Y is preferably 0.1-0.2%, and the percentage is the mass percentage relative to the total mass of the raw material composition.

In the present disclosure, the content of R2 is preferably 0.2-0.9%, such as 0.2%, 0.5%, 0.6%, 0.8% or 0.9%, and the percentage is the mass percentage relative to the total mass of the raw material composition.

In the present disclosure, in R2, the content of Tb is preferably 0.2%-1%, such as 0.2%, 0.3%, 0.6%, 0.8% or 0.9%, more preferably 0.5-1%, and the percentage is the mass percentage relative to the total mass of the raw material composition.

In the present disclosure, in the raw material composition, R2 also preferably comprises Pr and/or Dy.

Herein, when R2 comprises Pr, the content of Pr is preferably 0.2% or less, but not 0, such as 0.1%, and the percentage is the mass percentage relative to the total mass of the raw material composition.

Herein, when R2 comprises Dy, the content of Dy is preferably 0.3% or less, but not 0, such as 0.1%, and the percentage is the mass percentage relative to the total mass of the raw material composition.

In the present disclosure, the content of M is preferably 0.35% or less, but not 0, more preferably 0.01-0.35%, such as 0.01%, 0.1%, 0.15%, 0.16%, 0.2% or 0.3%, and the percentage is the mass percentage relative to the total mass of the raw material composition.

In the present disclosure, the kind of M is preferably one or more of Zn, Ga and Bi.

Herein, when M comprises Ga, the content of Ga is preferably 0.35% or less, but not 0, such as 0.01%, 0.1%, 0.15%, 0.2%, 0.3% or 0.35%, more preferably 0.1-0.35%, and the percentage is the mass percentage relative to the total mass of the raw material composition.

Herein, when M comprises Zn, the content of Zn is preferably 0.35% or less, but not 0, more preferably 0.05-0.25%, such as 0.08%, 0.1% or 0.2%, and the percentage is the mass percentage relative to the total mass of the raw material composition.

Herein, when M comprises Bi, the content of Bi is preferably 0.35% or less, but not 0, more preferably 0.05-0.15%, such as 0.08%, and the percentage is the mass percentage relative to the total mass of the raw material composition.

In the present disclosure, the content of Cu is preferably 0.03-0.15%, such as 0.03%, 0.05%, 0.06%, 0.07%, 0.08%, 0.1% or 0.15%; or, the content of Cu is preferably 0.08% or less, but not 0, such as 0.03%, 0.05%, 0.06%, 0.07% or 0.08%, and the percentage is the mass percentage relative to the total mass of the raw material composition.

In the present disclosure, the addition means of Cu preferably comprises being added during smelting and/or being added during grain boundary diffusion.

When Cu is added during grain boundary diffusion, the content of Cu added during the grain boundary diffusion is preferably 0.03-0.15%, such as 0.05%, and the percentage is the mass percentage relative to the total mass of the raw material composition; when Cu is added during grain boundary diffusion, Cu is preferably added in the form of a PrCu alloy; Herein the mass percentage of Cu relative to the PrCu is preferably 0.1-17%.

In the present disclosure, the content of B is preferably 0.97-1.05%, such as 0.99% or 1%, and the percentage is the mass percentage relative to the total mass of the raw material composition.

In the present disclosure, the content of Fe is preferably 65-69.5%, such as 65.99%, 67.21%, 67.63%, 67.71%, 68.09%, 68.19%, 68.95%, 68.96%, 69.06% or 69.91%, and the percentage is the mass percentage relative to the total mass of the raw material composition.

In the present disclosure, the raw material composition also preferably comprises Al.

Herein, the content of Al is preferably 0.3% or less, but not 0, more preferably 0.03-0.2%, such as 0.03%, 0.1% or 0.2%, and the percentage is the mass percentage relative to the total mass of the raw material composition.

Herein, when M comprises Ga, and Ga≤0.01%, preferably, in the composition of M elements, Al+Ga+Cu<0.11%; in a preferable embodiment of the present disclosure, the content of Ga is 0.01%, the content sum of "Al, Ga and Cu" is 0.07%, and the percentage is the mass percentage relative to the total mass of the raw material composition.

In the present disclosure, the raw material composition of the neodymium-iron-boron magnet material preferably comprises the following components by mass content: R: 29.5-32.6%; R comprising R1 and R2 , R1 comprising Nd and Dy, R1 being rare earth element added during smelting, the content of R2 being 0.2-0.9%, R2 comprising Tb, and R2 being rare earth element added during grain boundary diffusion; M: 0.35% or less, but not 0, M being one or more of Zn, Ga and Bi; Cu: 0.05-0.15%; B: 0.97-1.05%; Fe: 65-69.5%, the raw material composition does not comprise Co; the percentage is the mass percentage of the mass of each component relative to the total mass of the raw material composition.

In the present disclosure, the raw material composition of the neodymium-iron-boron magnet material preferably comprises the following components by mass content: R: 29.5-31%; R comprising R1 and R2, R1 comprising Nd and Dy, and R1 being rare earth element added during smelting, the content of R2 being 0.2-0.8%, R2 comprising Tb, and R2 being rare earth element added during grain boundary diffusion; M: 0.1-0.35%, M being one or more of Zn, Ga and Bi; Cu: 0.08% or less, but not 0; B: 0.97-1.05%; Fe: 65-69.5%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1: Nd 28.6%, Dy 0.05%, Pr 0.1%, R1 being rare earth element added during smelting; R2: Tb 1%, R2 being rare earth element added during grain boundary diffusion; Ga 0.05%, Al 0.1%, Cu 0.05%, B 0.99% and Fe 69.06%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1 Nd 28.6%, Dy 0.1%, Pr 0.2%, R1 being rare earth element added during smelting; R2: Tb 0.9%, R2 being rare earth element added during grain boundary diffusion; Ga 0.1%, Zn 0.1%, Cu 0.05%, B 1% and Fe 68.95%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1: Nd 28.6%, Dy 0.08%, R1 being rare earth element added during smelting; R2: Tb 0.9%, R2 being rare earth element added during grain boundary diffusion; Ga 0.3%, Cu 0.06%, B 1.1% and Fe 68.96%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1: Nd 29.9%, Dy 0.1%, R1 being rare earth element added during smelting; R2: Tb 0.8%, Pr 0.1%, R2 being rare earth element added during grain boundary diffusion; Ga 0.2%, Al 0.2%, Cu 0.03% added during smelting, Cu 0.05% added during grain boundary diffusion, B 0.99% and Fe 67.63%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1: Nd 30.4%, Dy 0.05%, R1 being rare earth element added during smelting; R2: Tb 0.8%, Dy 0.1%, R2 being rare earth element added during grain boundary diffusion; Ga 0.35%, Cu 0.1%, B 0.99% and Fe 67.21%, the raw material composition does not comprise Co; the percentage is the mass percentage of the mass of each component relative to the total mass of the raw material composition.

In the present disclosure, the raw material composition of the neodymium-iron-boron magnet material preferably comprises the following components by mass content: R: 30-31%; R comprising R1 and R2, R1 comprising Nd and Dy, and R1 being rare earth element added during smelting, the content of R2 being 0.5-0.7%, R2 comprising Tb, and R2 being rare earth element added during grain boundary diffusion; M: 0.1-0.2%, M being Zn and/or Ga; Cu: 0.05-0.09%; B: 0.97-1.05%; Fe: 67-69%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1 Nd 29.9%, Dy 0.1%, Pr 0.1%, R1 being rare earth element added during smelting; R2: Tb 0.6%, R2 being rare earth element added during grain boundary diffusion; Ga 0.15%, Cu 0.07%, B 0.99% and Fe 68.09%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1 Nd 29.9%, Dy 0.1%, R1 being rare earth element added during smelting; R2: Tb 0.6%, R2 being rare earth element added during grain boundary diffusion; Ga 0.15%, Cu 0.07%, B 0.99% and Fe 68.19%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1 Nd 30.4%, Dy 0.05%, R1 being rare earth element added during smelting; R2: Tb 0.3%, Pr 0.2%, R2 being rare earth element added during grain boundary diffusion; Zn 0.2%, Cu 0.12% added during smelting, Cu 0.03% added during grain boundary diffusion, B 0.99% and Fe 67.71%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1 Nd 32.1%, Dy 0.3%, R1 being rare earth element added during smelting; R2: Tb 0.2%, R2 being rare earth element added during grain boundary diffusion; Zn 0.08%, Bi 0.08%, Cu 0.15%, B 1.1% and Fe 65.99%, the raw material composition does not comprise Co; the percentage is the mass percentage of the mass of each component relative to the total mass of the raw material composition.

In a preferable embodiment of the present disclosure, the raw material composition of the neodymium-iron-boron magnet material comprises the following components by mass content: R1 Nd 28.6%, Dy 0.05%, Pr 0.1%, R1 being rare earth element added during smelting; R2: Tb 1%, R2 being rare earth element added during grain boundary diffusion; Ga 0.01%, Al 0.03%, Cu 0.03%, B 0.99% and Fe 69.19%, the raw material composition does not comprise Co; the percentage is the mass percentage of the mass of each component relative to the total mass of the raw material composition.

The present disclosure also provides a preparation method for neodymium-iron-boron magnet material, the preparation method is carried out by using the raw material composition mentioned above, and the preparation method is a conventional preparation method with diffusion in the field, wherein, R1 elements are added in smelting step, and R2 elements are added in grain boundary diffusion step.

In the present disclosure, the preparation method preferably comprises the following steps: subjecting the elements other than R2 in the raw material composition of the neodymium-iron-boron magnet material to
smelting,
powdering,
forming,
and sintering to obtain a sintered body,
and then subjecting the mixture of the sintered body and R2 to the grain boundary diffusion.

Herein, the operation and condition of smelting may be conventional smelting process in the field, generally smelting and casting the elements other than R2 in the raw material composition of the neodymium-iron-boron magnet material by using ingot casting process and quick-setting flake process to obtain alloy flakes.

Those skilled in the art know that due to the loss of rare earth elements in the smelting and sintering process, in order to guarantee the quality of the final product, 0-0.3wt% of rare earth elements (generally Nd element) will be additionally added based on the raw material composition formula during the general smelting process, the percentage is the mass percentage of the additionally added rare earth elements to the total mass of the raw material composition; in addition, the content of this part of the additionally added rare earth elements is not included in the scope of the raw material composition.

The temperature of the smelting may be 1300-1700°C, preferably 1450-1550°C.

The environment of the smelting may be a vacuum of 0.05Pa.

The smelting equipment is generally an intermediate frequency vacuum smelting furnace, such as an intermediate frequency vacuum induction rapid-setting belt-spinning furnace.

Herein, the operation and conditions of the powdering may be conventional powdering process in the art, generally comprising hydrogen decrepitation powdering and/or jet milling powdering.

The hydrogen decrepitation powdering generally comprises hydrogen absorption, dehydrogenation and cooling treatment. The temperature of the hydrogen absorption is generally 20-200°C. The temperature of the dehydrogenation is generally 400-650°C, preferably 500-550°C. The pressure of the hydrogen absorption is generally 50-600 kPa, preferably 300-500 kPa.

The jet milling powdering is generally carried out under the condition of 0.1-2MPa, preferably 0.5-0.7MPa. The airflow in the jet milling powdering is for example nitrogen. The time of the jet milling powdering may be 2-4h.

Herein, the forming may be the conventional process in the field. The magnetic field forming method is an example. The magnetic field strength of the magnetic field forming method is generally 1.5T or more.

Herein, the operation and conditions of the sintering may be conventional sintering process in the art.

The sintering may be carried out under the condition that the degree of vacuum is lower than 0.5Pa.

The temperature of sintering may be 1000-1200°C, preferably 1030-1090°C.

The time of sintering may be 0.5-10h, preferably 2-5h.

In the present disclosure, those skilled in the art know that, the coating operation of R2 is generally comprised before the grain boundary diffusion;

Herein, R2 is generally coated in the form of fluoride or alloy with low melting point, such as fluoride of Tb. When Dy is also comprised, preferably, Dy is coated in the form of fluoride of Dy.

Herein, when R2 comprise Pr, preferably, Pr is added in the form of a PrCu alloy. In the PrCu alloy, the mass ratio of Cu to the PrCu alloy is preferably 0.1-17%.

Preferably, the timing of adding Cu in the preparation method is the step of grain boundary diffusion, or adding simultaneously in the step of smelting and the step of grain boundary diffusion. In the present disclosure, the operation and conditions of the grain boundary diffusion treatment may be the conventional grain boundary diffusion process in the field.

The temperature of the grain boundary diffusion may be 800-1000°C, such as 850°C.

The time of the grain boundary diffusion may be 5-20h, preferably 5-15h.

After the grain boundary diffusion, a low-temperature tempering treatment is performed according to the conventional treatment in the field. The temperature of the low-temperature tempering treatment is generally 460-560°C. The time of the low-temperature tempering treatment is generally 1-3h.

The present disclosure also provides a neodymium-iron-boron magnet material made by the preparation method mentioned above.

The present disclosure also provides a neodymium-iron-boron magnet material, the neodymium-iron-boron magnet material comprises the following components by mass content: R: 28-33%; R comprising R1 and R2, R1 comprising Nd and Dy, and R2 comprising Tb; the content of R2 being 0.2%-1%;
M: ≤0.4%, but not 0, M being one or more of Bi, Sn, Zn, Ga, In, Au and Pb;
Cu: ≤0.15%, but not 0;
B: 0.9-1.1%;
Fe: 60-70%;
the neodymium-iron-boron magnet material does not comprise Co; the percentage is the percentage of the mass of each component relative to the total mass of the neodymium-iron-boron magnet material;
the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area of the grain boundary triangle region is 2-3.12%; the grain boundary continuity of the two-grain grain boundary is 96% or more; the mass ratio of C and O in the grain boundary triangle region is 0.4-0.5%, and the mass ratio of C and O in the two-grain grain boundary is 0.3-0.4%.

In the present disclosure, "the heavy rare earth elements in R1 are mainly distributed in the Nd₂Feₗ₄B grains" may be regarded as, the heavy rare earth elements in R1 caused by the conventional smelting and sintering process in the field are mainly distributed (generally refers to 95wt% or more) in the Nd₂Feₗ₄B grains, with a small amount distributed in the grain boundary. "R2 is mainly distributed in the shells" may be regarded as, R2 caused by the conventional grain boundary diffusion process in the art is mainly distributed (generally refers to 95wt% or more) in the shells and grain boundary of Nd₂Feₗ₄B grains (the two-grain grain boundary and grain boundary triangle), a small part will also diffuse into the Nd₂Feₗ₄B grains, such as at the outer edge of the Nd₂Feₗ₄B grains.

In the present disclosure, the calculation method for the grain boundary continuity refers to the ratio of the length occupied by the phases except for voids in the grain boundary (phases such as B-rich phase, rare-earth-rich phase, rare earth oxides, rare earth carbides, etc.) to the length of the total grain boundary. When the grain boundary continuity is 96% or more, it can be called a continuous channel.

In the present disclosure, the grain boundary triangle region generally refers to the place where three or more grain boundary phases intersect, and where B-rich phase, rare-earth-rich phase, rare earth oxides, rare earth carbides and voids are distributed. The calculation method of the area ratio of the grain boundary triangle region refers to the ratio of the area of the grain boundary triangle region to the total area of "grains and grain boundary".

Herein, rare earth oxides and rare earth carbides are mainly produced by C and O elements introduced in the preparation process. Due to the high content of the rare earth in grain boundary, C and O are usually more distributed in the grain boundary in magnet materials, and exist in the form of rare earth carbides and rare earth oxides, respectively. It should be noted that: C and O elements are introduced by conventional methods in the field, generally introduced by impurities or atmosphere, specifically for example, in the process of jet milling and pressing process, additives are introduced, these additives are removed by heating during sintering, but a small amount of C and O elements will inevitably remain; for another example, a small amount of O element will inevitably be introduced due to the atmosphere during the preparation process. In the present disclosure, through testing, in the neodymium-iron-boron magnet material product finally obtained, the contents of C and O are only 1000 and 1200 ppm or less, respectively, which belong to the conventional acceptable impurity category in the field, so they are not included in the product element statistics table.

In the present disclosure, the area ratio of the grain boundary triangle region is preferably 2.07-2.84%, such as 2.07%, 2.45%, 2.54%, 2.65%, 2.67%, 2.79% or 2.84%, more preferably 2.07-2.6%.

In the present disclosure, the grain boundary continuity is preferably 97% or more, such as 97.88%, 97.92%, 98.04%, 98.08%, 98.09%, 98.11%, 98.13%, 98.16%, 98.21% or 98.22%, more preferably 98% or more.

In the present disclosure, the mass ratio of C and O in the grain boundary triangle region is preferably 0.41-0.48%, such as 0.41%, 0.42%, 0.44%, 0.45%, 0.46%, 0.47% or 0.48%, more preferably 0.41-0.46%, the percentage is the ratio of the mass of C and O in the grain boundary triangle to the total mass of all elements in the grain boundary.

In the present disclosure, the mass ratio of C and O in the two-grain grain boundary is preferably 0.32-0.39%, such as 0.32%, 0.33%, 0.34%, 0.35%, 0.36%, 0.37% or 0.39%, more preferably 0.34-0.39%, the percentage is the ratio of the mass of C and O in the two-grain grain boundary to the total mass of all elements in the grain boundary.

In the present disclosure, those skilled in the art know that, C and O elements usually exist in the form of rare earth carbides and rare earth oxides in the grain boundary phase, therefore, "the mass ratio of C and O in the grain boundary triangle region" and "the mass ratio of C and O in the two-grain grain boundary" corresponds to the hetero-phases of rare earth carbides and rare earth oxides, respectively. In addition, the difference values of the "mass ratio of C and O in the grain boundary triangle region" minus the "mass ratio (%) of C and O in the two-grain grain boundary" in the examples reduce compared to those in the comparative examples, based on which the conclusion that the hetero-phases migrate from the grain boundary triangle region to the two-grain grain boundary can be obtained, which mechanically explains the reason for the improvement of the continuity of the grain boundary.

In the present disclosure, in the two-grain grain boundary of the neodymium-iron-boron magnet material, in addition to the two hetero-phases of rare earth oxides and rare earth carbides, preferably, a new phase is also detected in the two-grain grain boundary, the chemical composition of the new phase is RₓFe_{100-x-y-z}Cu_{y}M_{z}; wherein R in the RₓFe_{100-x-y-z}Cu_{y}M_{z} comprises one or more of Nd, Dy and Tb, and M is one or more of Bi, Sn, Zn, Ga, In, Au and Pb; x is 78-80; y is 0.8-1.5; z is 0.1 or less, but not 0.

In the RₓFe_{100-x-y-z}Cu_{y}M_{z}, x is preferably 78.1-79.5, y is preferably 0.99-1.33, and z is preferably 0.26-0.38.

In a preferable embodiment of the present disclosure, the structure of the new phase is for example, R_{78.89}Fe_{19.59}Cu_{1.17}M_{0.35}, R_{78.17}Fe_{20.50}Cu_{1.07}M_{0.26}, R_{77.87}FC_{20.50}Cu_{1.33}M_{0.30}, R_{79.42}Fe_{19.16}Cu_{1.07}M_{0.35}, R_{78.68}Fe_{19.77}Cu_{1.17}M_{0.38}, R_{78.50}FC_{20.13}CU_{1.03}M_{0.34}, R_{78.87}Fe_{19.79}Cu_{0.99}M_{0.35}, R_{78.14}Fe_{20.34}Cu_{1.23}M_{0.29}, R_{78.68}Fe_{19.80}Cu_{1.20}M_{0.32}, R_{79.41}Fe_{19.09}Cu_{1.17}M_{0.33}.

In the present disclosure, the ratio of the area of the new phase with a chemical composition of RₓFe_{100-x-y-z}Cu_{y}M_{z} in the two-grain grain boundary to the total area of the two-grain grain boundary is preferably 0.25-1.65%, such as 0.25%, 0.35%, 0.56%, 0.58%, 0.78%, 0.85%, 0.97%, 1.54%, 1.62% or 1.65%, more preferably 0.5-1.65%.

The inventors speculate that the new phase is formed in the two-grain grain boundary, so the continuity of the grain boundary is further improved, thereby improving the performance of the magnet.

In the present disclosure, in the neodymium-iron-boron magnet material, the content of R is preferably 29.5-32.6%, such as 29.58%, 29.75%, 29.8%, 30.6%, 30.7%, 30.9%, 30.95%, 31.35% or 32.6%, more preferably 29.5-31%, and the percentage is the mass percentage relative to the total mass of the neodymium-iron-boron magnet material.

In the present disclosure, in R1 of the neodymium-iron-boron magnet material, the content of Nd is conventional in the art, preferably 28.5-32.5%, such as 28.6%, 29.9%, 30.4% or 32.1%, more preferably 28.5-31%, and the percentage is the mass percentage relative to the total mass of the neodymium-iron-boron magnet material.

In the present disclosure, in R1 of the neodymium-iron-boron magnet material, the content of Dy is preferably 0.3% or less, but not 0, such as 0.05%, 0.08%, 0.1% or 0.3%, more preferably 0.05-0.2%, and the percentage is the mass percentage relative to the total mass of the neodymium-iron-boron magnet material.

In the present disclosure, R1 may also comprise other conventional rare earth elements, such as one or more of Pr, Ho, Tb, Gd and Y.

Herein, when R1 comprises Pr, the addition form of Pr may be conventional in the field, for example in the form of PrNd, or in the form of a mixture of pure Pr and pure Nd, or in a combination of "a mixture of PrNd, pure Pr and pure Nd". When added in the form of PrNd, Pr:Nd is preferably 25:75 or 20:80; when added in the form of a mixture of pure Pr and Nd, or, when added in a combination of a mixture of PrNd, pure Pr and Nd, the content of Pr is preferably 0.1-2%, such as 0.2%, and the percentage is the mass percentage relative to the total mass of the neodymium-iron-boron magnet material. In the present disclosure, the pure Pr or pure Nd generally means that the purity thereof is 99.5% or more.

Herein, when R1 comprises Ho, the content of Ho is preferably 0.1-0.2%, and the percentage is the mass percentage relative to the total mass of the neodymium-iron-boron magnet material.

Herein, when R1 comprises Gd, the content of Gd is preferably 0.1-0.2%, and the percentage is the mass percentage relative to the total mass of the neodymium-iron-boron magnet material.

Herein, when R1 comprises Y, the content of Y is preferably 0.1-0.2%, and the percentage is the mass percentage relative to the total mass of the neodymium-iron-boron magnet material.

In the present disclosure, the content of R2 is preferably 0.2-0.9%, such as 0.2%, 0.5%, 0.6%, 0.8% or 0.9%, and the percentage is the mass percentage relative to the total mass of the neodymium-iron-boron magnet material.

In the present disclosure, in R2, the content of Tb is preferably 0.2%-1%, such as 0.2%, 0.3%, 0.6%, 0.8% or 0.9%, more preferably 0.5-1%, and the percentage is the mass percentage relative to the total mass of the neodymium-iron-boron magnet material.

In the present disclosure, in the neodymium-iron-boron magnet material, R2 also preferably comprises Pr and/or Dy.

Herein, when R2 comprises Pr, the content of Pr is preferably 0.2% or less, but not 0, such as 0.1%, and the percentage is the mass percentage relative to the total mass of the neodymium-iron-boron magnet material.

Herein, when R2 comprises Dy, the content of Dy is preferably 0.3% or less, but not 0, such as 0.1%, and the percentage is the mass percentage relative to the total mass of the neodymium-iron-boron magnet material.

In the present disclosure, the content of M is preferably 0.35% or less, but not 0, more preferably 0.01-0.35%, such as 0.01%, 0.1%, 0.15%, 0.16%, 0.2% or 0.3%, and the percentage is the mass percentage relative to the total mass of the neodymium-iron-boron magnet material.

In the present disclosure, the kind of M is preferably one or more of Zn, Ga and Bi.

Herein, when M comprises Ga, the content of Ga is preferably 0.35% or less, but not 0, such as 0.01%, 0.1%, 0.15%, 0.2%, 0.3% or 0.35%, more preferably 0.1-0.35%, and the percentage is the mass percentage relative to the total mass of the neodymium-iron-boron magnet material.

Herein, when M comprises Zn, the content of Zn is preferably 0.35% or less, but not 0, more preferably 0.05-0.25%, such as 0.08%, 0.1% or 0.2%, and the percentage is the mass percentage relative to the total mass of the neodymium-iron-boron magnet material.

Herein, when M comprises Bi, the content of Bi is preferably 1 0.35% or less, but not 0, more preferably 0.05-0.15%, such as 0.08%, and the percentage is the mass percentage relative to the total mass of the neodymium-iron-boron magnet material.

In the present disclosure, the content of Cu is preferably 0.03-0.15%, such as 0.03%, 0.05%, 0.06%, 0.07%, 0.08%, 0.1% or 0.15%; or, the content of Cu is preferably 0.08% or less, but not 0, such as 0.03%, 0.05%, 0.06%, 0.07% or 0.08%, and the percentage is the mass percentage relative to the total mass of the neodymium-iron-boron magnet material.

In the present disclosure, the addition means of Cu preferably comprises being added during smelting and/or being added during grain boundary diffusion. When Cu is added during grain boundary diffusion, the content of Cu added during the grain boundary diffusion is preferably 0.03-0.15%, such as 0.05%, and the percentage is the mass percentage relative to the total mass of the neodymium-iron-boron magnet material; when Cu is added during grain boundary diffusion, Cu is preferably added in the form of a PrCu alloy; wherein the mass percentage of Cu relative to the PrCu is preferably 0.1-17%.

In the present disclosure, the content of B is preferably 0.97-1.05%, such as 0.99% or 1%, and the percentage is the mass percentage relative to the total mass of the neodymium-iron-boron magnet material.

In the present disclosure, the content of Fe is preferably 65-69.5%, such as 65.99%, 67.21%, 67.63%, 67.71%, 68.09%, 68.19%, 68.95%, 68.96%, 69.06% or 69.91%, and the percentage is the mass percentage relative to the total mass of the neodymium-iron-boron magnet material.

In the present disclosure, the neodymium-iron-boron magnet material also preferably comprises Al.

Herein, the content of Al is preferably 0.3% or less, but not 0, more preferably 0.2% or less, such as 0.03%, 0.1% or 0.2%, and the percentage is the mass percentage relative to the total mass of the neodymium-iron-boron magnet material.

Herein, when M comprises Ga, and Ga≤0.01%, preferably, in the composition of M elements, Al+Ga+Cu≤0.11%; in a preferable embodiment of the present disclosure, the content of Ga is 0.01%, the content sum of "Al, Ga and Cu" is 0.07%, and the percentage is the mass percentage relative to the total mass of the neodymium-iron-boron magnet material.

In the present disclosure, the neodymium-iron-boron magnet material preferably comprises the following components by mass content: R: 29.5-32.6%; R comprising R1 and R2, R1 comprising Nd and Dy, R1 being rare earth element added during smelting, the content of R2 being 0.2-0.9%, R2 comprising Tb, and R2 being rare earth element added during grain boundary diffusion; M: 0.35% or less, but not 0, M being one or more of Zn, Ga and Bi; Cu: 0.05-0.15%; B: 0.97-1.05%; Fe: 65-69.5%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2-2.84%; the grain boundary continuity of the two-grain grain boundary is 97% or more; the mass ratio of C and O in the triangle region is 0.41-0.48%, and the mass ratio of C and O in the two-grain grain boundary is 0.32-0.39%; the two-grain grain boundary also comprises a new phase, the chemical composition of the new phase is RₓFe_{100-x-y-z}Cu_{y}M_{z}; wherein, R in the RₓFe_{100-x-y-z}Cu_{y}M_{z} comprises one or more of Nd, Dy and Tb, and M is one or more of Bi, Sn, Zn, Ga, In, Au and Pb; x is 78.1-79.5; y is 0.99-1.33; z is 0.26-0.38; the ratio of the area of the new phase in the two-grain grain boundary to the total area of the two-grain grain boundary is 0.25-1.65%.

In the present disclosure, the neodymium-iron-boron magnet material preferably comprises the following components by mass content: R: 29.5-31%; R comprising R1 and R2, R1 comprising Nd and Dy, and R1 being rare earth element added during smelting, the content of R2 being 0.2-0.8%, R2 comprising Tb, and R2 being rare earth element added during grain boundary diffusion; M: 0.01-0.35%, M is one or more of Zn, Ga and Bi; Cu: 0.08% or less, but not 0; B: 0.97-1.05%; Fe: 65-69.5%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2-2.6%; the grain boundary continuity of the two-grain grain boundary is 98% or more; the mass ratio of C and O in the triangle region is 0.41-0.46%, and the mass ratio of C and O in the two-grain grain boundary is 0.32-0.39%; the two-grain grain boundary comprises a new phase, the chemical composition of the new phase is RₓFe_{100-x-y-z}Cu_{y}M_{z}; wherein, R in the RₓFe_{100-x-y-z}Cu_{y}M_{z} comprises one or more of Nd, Dy and Tb, and M is one or more of Bi, Zn and Ga; x is 78.1-79.5; y is 0.99-1.33; z is 0.26-0.38; the ratio of the area of the new phase the two-grain grain boundary to the total area of the two-grain grain boundary is 0.5-1.65%.

In a preferable embodiment of the present disclosure, the neodymium-iron-boron magnet material comprises the following components by mass content: R1: Nd 28.6%, Dy 0.05%, Pr 0.1%, R1 being rare earth element added during smelting; R2: Tb 1%, R2 being rare earth element added during grain boundary diffusion; Ga 0.05%, Al 0.1%, Cu 0.05%, B 0.99% and Fe 69.06%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.84%; the grain boundary continuity of the two-grain grain boundary is 98.11% or more; the mass ratio of C and O in the triangle region is 0.44%, and the mass ratio of C and O in the two-grain grain boundary is 0.39%; the two-grain grain boundary comprises a new phase, the chemical composition of the new phase is R_{78.89}Fe_{19.59}Cu_{1.17}M_{0.35}; wherein, R comprises one or more of Nd, Dy, Pr and Tb, and M is Ga; the ratio of the area of the new phase in the two-grain grain boundary to the total area of the two-grain grain boundary is 0.85%.

In a preferable embodiment of the present disclosure, the neodymium-iron-boron magnet material comprises the following components by mass content: R1: Nd 28.6%, Dy 0.1%, Pr 0.2%, R1 being rare earth element added during smelting; R2: Tb 0.9%, R2 being rare earth element added during grain boundary diffusion; Ga 0.1%, Zn 0.1%, Cu 0.05%, B 1% and Fe 68.95%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.65%; the grain boundary continuity of the two-grain grain boundary is 98.09% or more; the mass ratio of C and O in the triangle region is 0.41%, and the mass ratio of C and O in the two-grain grain boundary is 0.32%; the two-grain grain boundary comprises a new phase, the chemical composition of the new phase is R_{78.17}Fe_{20.50}Cu_{1.07}M_{0.26}; wherein, R comprises one or more of Nd, Dy, Pr and Tb, and M is Zn and Ga; the ratio of the area of the new phase in the two-grain grain boundary to the total area of the two-grain grain boundary is 0.56%.

In a preferable embodiment of the present disclosure, the neodymium-iron-boron magnet material comprises the following components by mass content: R1: Nd 28.6%, Dy 0.08%, R1 being rare earth element added during smelting; R2: Tb 0.9%, R2 being rare earth element added during grain boundary diffusion; Ga 0.3%, Cu 0.06%, B 1.1% and Fe 68.96%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.67%; the grain boundary continuity of the two-grain grain boundary is 97.92% or more; the mass ratio of C and O in the triangle region is 0.42%, and the mass ratio of C and O in the two-grain grain boundary is 0.34%; the two-grain grain boundary comprises a new phase, the chemical composition of the new phase is R_{77.87}Fe_{20.50}Cu_{1.33}M_{0.3}; wherein, R comprises one or more of Nd, Dy and Tb, and M is Ga; the ratio of the area of the new phase in the two-grain grain boundary to the total area of the two-grain grain boundary is 0.58%.

In a preferable embodiment of the present disclosure, the neodymium-iron-boron magnet material comprises the following components by mass content: R1: Nd 29.9%, Dy 0.1%, R1 being rare earth element added during smelting; R2: Tb 0.8%, Pr 0.1%, R2 being rare earth element added during grain boundary diffusion; Ga 0.2%, Al 0.2%, Cu 0.08%, B 0.99% and Fe 67.63%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.54%; the grain boundary continuity of the two-grain grain boundary is 98.22% or more; the mass ratio of C and O in the triangle region is 0.48%, and the mass ratio of C and O in the two-grain grain boundary is 0.33%; the two-grain grain boundary comprises a new phase, the chemical composition of the new phase is R_{79.42}Fe_{19.16}Cu_{1.07}M_{0.35}; wherein, R comprises one or more of Nd, Dy and Tb, and M is Al and Ga; the ratio of the area of the new phase to the total area in the two-grain grain boundary of the two-grain grain boundary is 1.65%.

In a preferable embodiment of the present disclosure, the neodymium-iron-boron magnet material comprises the following components by mass content: R1: Nd 30.4%, Dy 0.05%, R1 being rare earth element added during smelting; R2: Tb 0.8%, Dy 0.1%, R2 being rare earth element added during grain boundary diffusion; Ga 0.35%, Cu 0.1%, B 0.99% and Fe 67.21%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.07%; the grain boundary continuity of the two-grain grain boundary is 98.04% or more; the mass ratio of C and O in the triangle region is 0.46%, and the mass ratio of C and O in the two-grain grain boundary is 0.35%; the two-grain grain boundary comprises a new phase, the chemical composition of the new phase is R_{78.68}Fe_{19.77}Cu_{1.17}M_{0.38}; wherein, R comprises one or more of Nd, Dy and Tb, and M is Ga; the ratio of the area of the new phase in the two-grain grain boundary to the total area of the two-grain grain boundary is 1.54%.

In the present disclosure, the neodymium-iron-boron magnet material preferably comprises the following components by mass content: R: 30-31%; R comprising R1 and R2, R1 comprising Nd and Dy, and R1 being rare earth element added during smelting, the content of R2 is 0.5-0.7%, R2 comprising Tb, and R2 being rare earth element added during grain boundary diffusion; M: 0.1-0.2%, M is Zn and/or Ga; Cu: 0.05-0.09%; B: 0.97-1.05%; Fe: 67-69%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.07-2.6%; the grain boundary continuity of the two-grain grain boundary is 98-98.3%; the mass ratio of C and O in the triangle region is 0.41-0.46%, and the mass ratio of C and O in the two-grain grain boundary is 0.34-0.39%; the two-grain grain boundary comprises a new phase, the chemical composition of the new phase is RₓFe_{100-x-y-z}Cu_{y}M_{z}; wherein, R in the RₓFe_{100-x-y-z}Cu_{y}M_{z} comprises one or more of Nd, Dy and Tb, and M is one or more of Bi, Sn, Zn, Ga, In, Au and Pb; x is 78.1-79.5; y is 0.99-1.33; z is 0.26-0.38; the ratio of the area of the new phase in the two-grain grain boundary to the total area of the two-grain grain boundary is 0.5-1.65%.

In a preferable embodiment of the present disclosure, the neodymium-iron-boron magnet material comprises the following components by mass content: R1: Nd 29.9%, Dy 0.1%, Pr 0.1%, R1 being rare earth element added during smelting; R2: Tb 0.6%, R2 being rare earth element added during grain boundary diffusion; Ga 0.15%, Cu 0.07%, B 0.99% and Fe 68.09%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.45%; the grain boundary continuity of the two-grain grain boundary is 98.08% or more; the mass ratio of C and O in the triangle region is 0.44%, and the mass ratio of C and O in the two-grain grain boundary is 0.35%; the two-grain grain boundary comprises a new phase, the chemical composition of the new phase is R_{78.50}Fe_{20.13}Cu_{1.03}M_{0.34}, R comprises one or more of Nd, Dy and Tb, and M is Ga; the ratio of the area of the new phase in the two-grain grain boundary to the total area of the two-grain grain boundary is 1.62%.

In a preferable embodiment of the present disclosure, the neodymium-iron-boron magnet material comprises the following components by mass content: R1: Nd 29.9%, Dy 0.1%, R1 being rare earth element added during smelting; R2: Tb 0.6%, R2 being rare earth element added during grain boundary diffusion; Ga 0.15%, Cu 0.07%, B 0.99% and Fe 68.19%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.67%; the grain boundary continuity of the two-grain grain boundary is 98.13% or more; the mass ratio of C and O in the triangle region is 0.47%, and the mass ratio of C and O in the two-grain grain boundary is 0.37%; the two-grain grain boundary comprises a new phase, the chemical composition of the new phase is R_{78.87}Fe_{19.79}Cu_{0.99}M_{0.35}, R comprises one or more of Nd, Dy and Tb, and M is Ga; the ratio of the area of the new phase in the two-grain grain boundary to the total area of the two-grain grain boundary is 0.97%.

In a preferable embodiment of the present disclosure, the neodymium-iron-boron magnet material comprises the following components by mass content: R1: Nd 30.4%, Dy 0.05%, R1 being rare earth element added during smelting; R2: Tb 0.3%, Pr 0.2%, R2 being rare earth element added during grain boundary diffusion; Zn 0.2%, Cu 0.15%, B 0.99% and Fe 67.71%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Fe₁₄B grains and their shells, a two-grain grain boundary and a grain boundary triangle region adjacent to the Nd₂Fe₁₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2.65%; the grain boundary continuity of the two-grain grain boundary is 98.21% or more; the mass ratio of C and O in the triangle region is 0.42%, and the mass ratio of C and O in the two-grain grain boundary is 0.36%; the two-grain grain boundary comprises a new phase, the chemical composition of the new phase is R_{78.14}Fe_{20.34}Cu_{1.23}M_{0.29}, R comprises one or more of Nd, Dy and Tb, and M is Zn; the ratio of the area of the new phase in the two-grain grain boundary to the total area of the two-grain grain boundary is 0.25%.

In a preferable embodiment of the present disclosure, the neodymium-iron-boron magnet material comprises the following components by mass content: R1: Nd 32.1%, Dy 0.3%, R1 being rare earth element added during smelting; R2: Tb 0.2%, R2 being rare earth element added during grain boundary diffusion; Zn 0.08%, Bi 0.08%, Cu 0.15%, B 1.1% and Fe 65.99%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Fe₁₄B grains and their shells, a two-grain grain boundary and a grain boundary triangle region adjacent to the Nd₂Fe₁₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 3.12%; the grain boundary continuity of the two-grain grain boundary is 97.88% or more; the mass ratio of C and O in the triangle region is 0.45%, and the mass ratio of C and O in the two-grain grain boundary is 0.37%; the two-grain grain boundary comprises a new phase, the chemical composition of the new phase is R_{78.68}Fe_{19.80}Cu_{1.20}M_{0.32}, R comprises one or more of Nd, Dy and Tb, and M is Zn and Bi; the ratio of the area of the new phase in the two-grain grain boundary to the total area of the two-grain grain boundary is 0.35%.

In a preferable embodiment of the present disclosure, the neodymium-iron-boron magnet material comprises the following components by mass content: R1: Nd 28.6%, Dy 0.05%, Pr 0.1%, R1 being rare earth element added during smelting; R2: Tb 1%, R2 being rare earth element added during grain boundary diffusion; Ga 0.01%, Al 0.03%, Cu 0.03%, B 0.99% and Fe 69.19%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Fe₁₄B grains and their shells, a two-grain grain boundary and a grain boundary triangle region adjacent to the Nd₂Fe₁₄B grains, wherein the heavy rare earth elements in R1 are distributed in the Nd₂Fe₁₄B grains, and R2 is mainly distributed in the shells, the two-grain grain boundary and the grain boundary triangle region, the area ratio of the grain boundary triangle region is 2.79%; the grain boundary continuity of the two-grain grain boundary is 98.16% or more; the mass ratio of C and O in the triangle region is 0.42%, and the mass ratio of C and O in the two-grain grain boundary is 0.34%; the two-grain grain boundary comprises a new phase, the chemical composition of the new phase is R_{79.41},Fe_{19.09}Cu_{1.17}M_{0.33}, R comprises one or more of Nd, Dy and Tb, and M is Ga; the ratio of the area of the new phase in the two-grain grain boundary to the total area of the two-grain grain boundary is 0.78%.

The content range of the total rare earth amount TRE, Cu and M (Ga, Zn, etc.) elements in the neodymium-iron-boron magnet material provided by the present disclosure is reasonably controlled, and is combined with the specific timing of the addition of heavy rare earth elements, so that the hetero-phases (rare earth oxides and rare earth carbides) are more distributed in the two-grain grain boundary, rather than agglomerated in the grain boundary triangle region, so that the continuity of the grain boundary is increased, the area of the grain boundary triangle region is reduced, and it is beneficial to obtain higher density, thereby increasing the remanence Br of the magnet; it also promotes the uniform distribution of Tb element mainly in the grain boundary and the main phase shell, which increases the coercive force Hcj of the magnet.

The present disclosure also provides a use of the neodymium-iron-boron magnet material mentioned above in the preparation of magnetic steel.

Herein, the magnetic steel is preferably high-performance magnetic steel of 54SH, 54UH, 56SH.

Based on the common sense in the field, the preferred conditions of the preparation methods can be combined arbitrarily to obtain preferred examples of the present disclosure.

The reagents and raw materials used in the disclosure are commercially available.

The positive progress of the present disclosure is that, through the cooperation of the specific contents of various elements, the neodymium-iron-boron magnet material of the present disclosure without Co and a large number of heavy rare earth elements, on the basis of the existing neodymium-iron-boron magnet material, can enhance the proportion of the phase in the two-grain grain boundary phase, and generate a new phase in the two-grain grain boundary; accordingly, increase the continuity of the two-grain grain boundary, reduce the proportion of the hetero-phases in the grain boundary triangle, and accordingly reduce the area of the grain boundary triangle. The remanence Br, coercivity Hcj, and temperature stability of neodymium-iron-boron magnets are improved thereby, wherein the remanence can reach 14.31-14.61kGs, the coercivity can reach 24.11-26.35kOe, and the Br temperature coefficient α can reach -0.105 to -0.109 at 20-120°C.

### BRIEF DESCRIPTION OF THE DRAWINGS

Figure 1 shows the EPMA microstructure of the neodymium-iron-boron magnet material of Example 4. The point pointed by arrow 1 in the figure is the new phase of RₓFe_{100-x-y-z}Cu_{y}M_{z} contained in the two-grain grain boundary, the position pointed by arrow 2 is the grain boundary triangle region, and the position pointed by arrow 3 is the main phase of Nd₂Feₗ₄B.

### DETAILED DESCRIPTION OF THE PREFERRED EMBODIMENT

The following embodiments further illustrate the present disclosure, but the present disclosure is not limited thereto. Experiment methods in which specific conditions are not indicated in the following embodiments are selected according to conventional methods and conditions, or according to the product specification.
1. The raw material compositions of the neodymium-iron-boron magnet materials for Embodiments 1-10 and Comparative Embodiments 1-3 of the present disclosure are shown in Table 1 below.

**Table 1 Formulations and contents of raw material compositions of neodymium-iron-boron magnet materials (wt%)**

| | **R1** | | | **R2** | | | **M** | | | **Al** | Cu | **B** | **Fe** |
|---|---|---|---|---|---|---|---|---|---|---|---|---|---|
| | **Nd** | **Dy** | **Pr** | **Tb** | **Pr** | **Dy** | **Ga** | **Zn** | **Bi** | | | | |
| Embodiment 1 | 28.6 | 0.05 | 0.1 | 1 | / | / | 0.05 | / | / | 0.1 | 0.05 | 0.99 | 69.06 |
| Embodiment 2 | 28.6 | 0.1 | 0.2 | 0.9 | / | / | 0.1 | 0.1 | / | / | 0.05 | 1 | 68.95 |
| Embodiment 3 | 28.6 | 0.08 | / | 0.9 | / | / | 0.3 | / | / | / | 0.06 | 1.1 | 68.96 |
| Embodiment 4 | 29.9 | 0.1 | / | 0.8 | 0.1 | / | 0.2 | / | / | 0.2 | 0.08 | 0.99 | 67.63 |
| Embodiment 5 | 30.4 | 0.05 | / | 0.8 | | 0.1 | 0.35 | / | / | / | 0.1 | 0.99 | 67.21 |
| Embodiment 6 | 29.9 | 0.1 | 0.1 | 0.6 | / | / | 0.15 | / | / | / | 0.07 | 0.99 | 68.09 |
| Embodiment 7 | 29.9 | 0.1 | / | 0.6 | / | / | 0.15 | / | / | / | 0.07 | 0.99 | 68.19 |
| Embodiment 8 | 30.4 | 0.05 | / | 0.3 | 0.2 | / | / | 0.2 | / | / | 0.15 | 0.99 | 67.71 |
| Embodiment 9 | 32.1 | 0.3 | / | 0.2 | / | / | / | 0.08 | 0.08 | / | 0.15 | 1.1 | 65.99 |
| Embodiment 10 | 28.6 | 0.05 | 0.1 | 1 | / | / | 0.01 | / | / | 0.03 | 0.03 | 0.99 | 69.19 |
| Comparative Embodiment 1 | 29.9 | 0.1 | / | | 0.1 | 0.8 | 0.2 | / | / | 0.2 | 0.08 | 0.99 | 67.63 |
| Comparative Embodiment 2 | 29.9 | 0.1 | / | 0.8 | 0.1 | 0 | 0.2 | / | / | 0.2 | 0.25 | 0.99 | 67.46 |
| Comparative Embodiment 3 | 29.9 | 0.1 | / | 0.8 | 0.1 | 0 | 0.45 | / | / | 0.2 | 0.08 | 0.99 | 67.38 |

| | | | | | | | | | | | | | |
|---|---|---|---|---|---|---|---|---|---|---|---|---|---|
| Note: "/" refers to being without the element. wt% is the mass percentage. | | | | | | | | | | | | | |

2. Preparation method for the neodymium-iron-boron magnet material in Embodiment 1
(1) Smelting and casting process: according to the formulation in Table 1, the prepared raw materials except R2 (R2 was added as PrCu in Embodiments 4 and 8, and in Embodiments 4 and 8, the contents of Cu added in the grain boundary diffusion step were respectively 0.05 wt% and 0.03 wt%, the contents of Cu added in the smelting step were respectively 0.03 wt% and 0.12 wt%) were placed into the crucible of alumina, and were vacuum smelted in a highfrequency vacuum smelting furnace with a vacuum of 0.05 Pa and 1500°C, and were cast in the medium-frequency vacuum induction quick-setting dumping belt furnace with argon gas, then quenched the alloy to obtain the alloy flakes.
(2) Hydrogen decrepitation powdering process: the furnace for hydrogen decrepitation with the quench alloy placed therein was evacuated at room temperature, and then hydrogen of 99.9% purity was introduced into the furnace for hydrogen decrepitation, the pressure of hydrogen was maintained at 90kPa, and after sufficient hydrogen absorption, it was sufficiently dehydrogenated by heating while evacuating, and then it was cooled and the powder crushed by hydrogen decrepitation was taken out. Herein, the temperature of hydrogen absorption was the room temperature, and the temperature of dehydrogenation was 550°C.
(3) Jet milling process: the powder crushed by hydrogen decrepitation was crushed by jet milling for 3h at the pressure of 0.6MPa in the crushing chamber under nitrogen atmosphere to obtain fine powder.
(4) Forming process: the powder subjected to jet milling was formed under a magnetic field strength of 1.5T or more.
(5) Sintering process: each forming body was moved to the sintering furnace for sintering, the sintering was carried out at 1030-1090 °C for 2-5h under vacuum below 0.5Pa to obtain the sintered body.
(6) Grain boundary diffusion process: the surface of the sintered body was purified and R2 (e.g. one or more of alloys or fluorides of Tb, alloys or fluorides of Dy and PrCu alloys, wherein Cu was added both in the smelting step and the grain boundary diffusion step) was coated on the surface of the sintered body and diffused at 850°C for 5-15h, and then it was cooled to room temperature, and was subjected to the low-temperature tempering treatment at 460-560°C for 1-3h.
The parameters in the preparation method for neodymium-iron-boron magnet material in Embodiments 2-10 and Comparative Embodiments 1-3 were the same as those in Embodiment 1. Herein, in Embodiments 4 and 8, the raw materials in the formulations in Table 1 except for R2 and Cu that needed to be added in the grain boundary diffusion were smelted and cast.
3. Composition determination: The neodymium-iron-boron magnet material in Embodiments 1-10 and Comparative Embodiments 1-3 were determined by using high frequency inductively coupled plasma emission spectrometer (ICP-OES). The results are shown in Table 2 below.

**Table 2 Components and contents of neodymium-iron-boron magnet materials (wt%)**

| | **R1** | | | **R2** | | | **M** | | | **Al** | Cu | **B** | **Fe** |
|---|---|---|---|---|---|---|---|---|---|---|---|---|---|
| | **Nd** | **Dy** | **Pr** | **Tb** | **Pr** | **Dy** | **Ga** | **Zn** | **Bi** | | | | |
| Embodiment 1 | 28.6 | 0.05 | 0.1 | 1 | / | / | 0.05 | / | / | 0.1 | 0.05 | 0.99 | 69.06 |
| Embodiment 2 | 28.6 | 0.1 | 0.2 | 0.9 | / | / | 0.1 | 0.1 | / | / | 0.05 | 1 | 68.95 |
| Embodiment 3 | 28.6 | 0.08 | / | 0.9 | / | / | 0.3 | / | / | / | 0.06 | 1.1 | 68.96 |
| Embodiment 4 | 29.9 | 0.1 | / | 0.8 | 0.1 | / | 0.2 | / | / | 0.2 | 0.08 | 0.99 | 67.63 |
| Embodiment 5 | 30.4 | 0.05 | / | 0.8 | | 0.1 | 0.35 | / | / | / | 0.1 | 0.99 | 67.21 |
| Embodiment 6 | 29.9 | 0.1 | 0.1 | 0.6 | / | / | 0.15 | / | / | / | 0.07 | 0.99 | 68.09 |
| Embodiment 7 | 29.9 | 0.1 | / | 0.6 | / | / | 0.15 | / | / | / | 0.07 | 0.99 | 68.19 |
| Embodiment 8 | 30.4 | 0.05 | / | 0.3 | 0.2 | / | / | 0.2 | / | / | 0.15 | 0.99 | 67.71 |
| Embodiment 9 | 32.1 | 0.3 | / | 0.2 | / | / | / | 0.08 | 0.08 | / | 0.15 | 1.1 | 65.99 |
| Embodiment 10 | 28.6 | 0.05 | 0.1 | 1 | / | / | 0.01 | / | / | 0.03 | 0.03 | 0.99 | 69.19 |
| Comparative Embodiment 1 | 29.9 | 0.1 | / | | 0.1 | 0.8 | 0.2 | / | / | 0.2 | 0.08 | 0.99 | 67.63 |
| Comparative Embodiment 2 | 29.9 | 0.1 | / | 0.8 | 0.1 | 0 | 0.2 | / | / | 0.2 | 0.25 | 0.99 | 67.46 |
| Comparative Embodiment 3 | 29.9 | 0.1 | / | 0.8 | 0.1 | 0 | 0.45 | / | / | 0.2 | 0.08 | 0.99 | 67.38 |

| | | | | | | | | | | | | | |
|---|---|---|---|---|---|---|---|---|---|---|---|---|---|
| Note: "/" refers to being without the element. wt% is the mass percentage. | | | | | | | | | | | | | |

### Effect Embodiment 1

The neodymium-iron-boron magnet materials of Embodiments 1-9 and Comparative Embodiments 1-3 were tested as follows.
1. Magnetic property test: The sintered magnets were tested for magnetic properties using PFM-14 magnetic property measuring instrument of Hirs, UK. The magnetic properties tested included remanence at 20°C and 120°C, coercivity at 20°C and 120°C, and the corresponding remanence temperature coefficient. Herein, the formula for calculating the temperature coefficient of remanence is: (Br _{high temperature} - Br _{room temperature}) / (Br room temperature (high temperature - room temperature)) × 100%, and the results are shown in Table 3 below.
2. FE-EPMA testing: the perpendicular orientation surface of neodymium-iron-boron magnet material was polished and tested by field emission electron probe microanalyzer (FE-EPMA) (Japan Electronics Company (JEOL), 8530F). The area ratio of the grain boundary triangle, continuity of the two-grain grain boundary, mass ratio of C and O, and new phases were tested.

The continuity of the two-grain grain boundary was calculated according to the backscattered images of EPMA; the mass ratio of C and O in the two-grain grain boundary and grain boundary triangle and the new phase were measured by elemental analysis of EPMA.

The area ratio of the grain boundary triangle (%) refers to the ratio of the area of the grain boundary triangle to the total area of the "grain and grain boundary".

The continuity of the grain boundary (%) refers to the ratio of the length occupied by the phases except for voids (phases such as B-rich phase, rare-earth-rich phase, rare earth oxides, rare earth carbides, etc.) in the grain boundary to the length of the total grain boundary.

The mass ratio of C and O in the grain boundary triangle (%) refers to the ratio of the mass of C and O in the grain boundary triangle to the total mass of all elements in the grain boundary.

The mass ratio (%) of C and O in the two-grain grain boundary refers to the ratio of the mass of C and O in the two-grain grain boundary to the total mass of all elements in the grain boundary.

The ratio of the area of the new phase in the two-grain grain boundary (%) refers to the ratio of the area of the new phase in the two-grain grain boundary to the total area of the two-grain grain boundary.

**Table 3**

| | Br(k Gs) | Hcj(k Oe) | 120-Br(k Gs) | Temperat urecoeffi cient of 20-120°CBr α(Br)%/ ° C | Area percenta ge of the triangle region% | Continuit y of the two-grain grain boundary phase % | mass percentage of C and O the two-grain grain boundary (%) | mass percenta inge of C and O in the triangle region (%) | new phase | Area percentage of new phase in the two-grain grain boundary (%) |
|---|---|---|---|---|---|---|---|---|---|---|
| Embodiment 1 | 14.51 | 25.23 | 12.94 | -0.108 | 2.84 | 98.11 | 0.39 | 0.44 | R_{78.89}Fe_{19.59}Cu_{1.17}M_{0.35 35} | 0.85 |
| Embodiment 2 | 14.58 | 24.82 | 12.99 | -0.109 | 2.65 | 98.09 | 0.32 | 0.41 | R_{78.17}FC_{20.50}Cu_{1.07}M_{0. 26} | 0.56 |
| Embodiment 3 | 14.53 | 24.75 | 12.97 | -0.107 | 2.67 | 97.92 | 0.34 | 0.42 | R_{77.97}Fe_{20.50}Cu_{1.33}M_{0. 30} | 0.58 |
| Embodiment 4 | 14.42 | 26.35 | 12.86 | -0.108 | 2.54 | 98.22 | 0.33 | 0.48 | R_{79.42}Fe_{19.16}Cu_{1.07}M_{0. 35} | 1.65 |
| Embodiment 5 | 14.45 | 26.21 | 12.91 | -0.107 | 2.07 | 98.04 | 0.35 | 0.46 | R_{79.68}Fe_{19.77}Cu_{1.17}M_{0. 38} | 1.54 |
| Embodiment 6 | 14.61 | 25.92 | 13.07 | -0.105 | 2.45 | 98.08 | 0.35 | 0.44 | R_{78.50}Fe_{20.13}Cu_{1.03}M_{0. 34} | 1.62 |
| Embodiment 7 | 14.61 | 25.6 | 13.02 | -0.109 | 2.67 | 98.13 | 0.37 | 0.47 | R_{78.87}Fe_{19.79}Cu_{0.99}M_{0. 35} | 0.97 |
| Embodiment 8 | 14.46 | 24.21 | 12.92 | -0.107 | 2.65 | 98.21 | 0.36 | 0.42 | R_{78.14}Fe_{20.34}Cu_{1.23}M_{0. 29} | 0.25 |
| Embodiment 9 | 14.31 | 24.11 | 12.78 | -0.107 | 3.12 | 97.88 | 0.37 | 0.45 | R_{78.68}Fe_{19.80}Cu_{1.20}M_{0. 32} | 0.35 |
| Embodiment 10 | 14.53 | 25.68 | 13.01 | -0.105 | 2.79 | 98.16 | 0.34 | 0.42 | R_{79.41}Fe_{19.09}Cu_{1.17}M_{0. 33} | 0.78 |
| Comparative Embodiment 1 | 14.39 | 22.16 | 12.81 | -0.110 | 3.86 | 96.45 | 0.21 | 0.54 | × | 0 |
| Comparative Embodiment 2 | 14.35 | 23.37 | 12.82 | -0.107 | 3.92 | 96.51 | 0.25 | 0.52 | × | 0 |
| Comparative Embodiment 3 | 14.26 | 23.99 | 12.72 | -0.108 | 3.78 | 96.34 | 0.24 | 0.56 | × | 0 |

| | | | | | | | | | | |
|---|---|---|---|---|---|---|---|---|---|---|
| Note: "×" refers to that the new phase with chemical composition of RₓFe_{100-x-y-z}Cu_{y}M_{z} was not contained in the two-grain grain boundary phase. | | | | | | | | | | |

From Table 3 mentioned above, the present disclosure, with the addition of a small amount of heavy rare earth elements and without the addition of Co element, can reach a comparable level to those with addition of a large amount of Co and heavy rare earth elements at present. In addition, due to the high content of the rare earth in the grain boundary, C and O are more distributed in the grain boundary and exist in the form of rare earth carbides and rare earth oxides, respectively. The difference values of the "mass ratio of C and O in the grain boundary triangle region" minus the "mass ratio (%) of C and O in the two-grain grain boundary" in Embodiments 1-10 reduce compared to those in the Comparative Embodiments 1-3, based on which the conclusion that the hetero-phases (rare earth carbides and rare earth oxides) migrate from the grain boundary triangle region to the two-grain grain boundary can be obtained, which mechanically explains the improvement of the continuity of the two-grain grain boundary.

### Effect Embodiment 2

As shown in Figure 1, the EPMA microstructure of the neodymium-iron-boron magnet material prepared in Embodiment 4 is shown. The point pointed by arrow 1 in the figure is the new phase of RₓFe_{100-x-y-z}Cu_{y}M_{z} contained in the two-grain grain boundary (light gray area), the position pointed by arrow 2 is the grain boundary triangle region (silver-white area), and the position pointed by arrow 3 is the main phase of Nd₂Feₗ₄B (dark gray area). Combined with the data in Table 3, it can be further seen that the area of the grain boundary triangle region is smaller than that of the conventional magnet material.

## Claims

1. A raw material composition of neodymium-iron-boron magnet material, comprising the following components by mass content:
R: 28-33%; R being rare earth element comprising R1 and R2, R1 being rare earth element added during smelting, and R1 comprising Nd and Dy; R2 being rare earth element added during grain boundary diffusion, R2 comprising Tb, and the content of R2 being 0.2-1%;
M: ≤0.4%, but not 0, M being one or more of Bi, Sn, Zn, Ga, In, Au and Pb;
Cu: ≤0.15%, but not 0;
B: 0.9-1.1%;
Fe: 60-70%;
the raw material composition does not comprise Co; the percentage is the mass percentage of the mass of each component relative to the total mass of the raw material composition.

2. The raw material composition according to claim 1, wherein, the content of R is 29.5-32.6%, preferably 29.5-31%, and the percentage is the mass percentage relative to the total mass of the raw material composition;
and/or, in R1 of the raw material composition, the content of Nd is 28.5-32.5%, preferably 28.5-31%, and the percentage is the mass percentage relative to the total mass of the raw material composition;
and/or, in R1 of the raw material composition, the content of Dy is 0.3% or less, but not 0, preferably 0.05-0.2%, and the percentage is the mass percentage relative to the total mass of the raw material composition;
and/or, R1 also comprises one or more of Pr, Ho, Tb, Gd and Y;
wherein, when R1 comprises Pr, Pr is added preferably in the form of PrNd, or in the form of a mixture of pure Pr and pure Nd, or added in a combination of "a mixture of PrNd, pure Pr and pure Nd"; when added in the form of PrNd, Pr:Nd is preferably 25:75 or 20:80; when added in the form of a mixture of pure Pr and Nd or in a combination of a mixture of PrNd, pure Pr and Nd, the content of Pr is preferably 0.1-2wt%, wherein the percentage is the mass percentage relative to the total mass of the raw material composition;
wherein, when R1 comprises Ho, the content of Ho is preferably 0.1-0.2%, and the percentage is the mass percentage relative to the total mass of the raw material composition;
wherein, when R1 comprises Gd, the content of Gd is preferably 0.1-0.2%, and the percentage is the mass percentage relative to the total mass of the raw material composition;
wherein, when R1 comprises Y, the content of Y is preferably 0.1-0.2%, and the percentage is the mass percentage relative to the total mass of the raw material composition;
and/or, the content of R2 is 0.2-0.9%, and the percentage is the mass percentage relative to the total mass of the raw material composition;
and/or, in R2, the content of Tb is 0.2%-1%, preferably 0.5-1%, and the percentage is the mass percentage relative to the total mass of the raw material composition;
and/or, in the raw material composition, R2 also comprises Pr and/or Dy;
wherein, when R2 comprises Pr, the content of Pr is preferably 0.2% or less, but not 0, and the percentage is the mass percentage relative to the total mass of the raw material composition;
wherein, when R2 comprises Dy, the content of Dy is preferably 0.3% or less, but not 0, and the percentage is the mass percentage relative to the total mass of the raw material composition;
and/or, the content of M is 0.35% or less, but not 0, preferably 0.01-0.35%, and the percentage is the mass percentage relative to the total mass of the raw material composition;
and/or, the kind of M is one or more of Zn, Ga and Bi;
wherein, when M comprises Ga, the content of Ga is preferably 0.35% or less, but not 0, more preferably 0.1-0.35%, and the percentage is the mass percentage relative to the total mass of the raw material composition;
wherein, when M comprises Zn, the content of Zn is preferably 0.35% or less, but not 0, more preferably 0.05-0.25%, and the percentage is the mass percentage relative to the total mass of the raw material composition;
wherein, when M comprises Bi, the content of Bi is preferably 0.35% or less, but not 0, more preferably 0.05-0.15%, and the percentage is the mass percentage relative to the total mass of the raw material composition;
and/or, the content of Cu is 0.03-0.15%, or, the content of Cu is 0.08% or less, but not 0, and the percentage is the mass percentage relative to the total mass of the raw material composition;
and/or, the addition means of Cu comprises being added during smelting and/or being added during grain boundary diffusion;
wherein, when Cu is added during grain boundary diffusion, the content of Cu added during the grain boundary diffusion is preferably 0.03-0.15%, and the percentage is the mass percentage relative to the total mass of the raw material composition; when Cu is added during grain boundary diffusion, Cu is preferably added in the form of a PrCu alloy; wherein the mass percentage of Cu relative to the PrCu is preferably 0.1-17%;
and/or, the content of B is 0.97-1.05%, and the percentage is the mass percentage relative to the total mass of the raw material composition;
and/or, the content of Fe is 65-69.5%, and the percentage is the mass percentage relative to the total mass of the raw material composition;
and/or, the raw material composition also comprises Al; the content of Al is preferably 0.3% or less, but not 0, more preferably 0.03-0.2%, and the percentage is the mass percentage relative to the total mass of the raw material composition;
wherein, when M comprises Ga, and Ga≤0.01%, preferably, in the composition of M elements, Al+Ga+Cu<0.11%, and the percentage is the mass percentage relative to the total mass of the raw material composition.

3. The raw material composition according to claim 1 or 2, wherein, the raw material composition of the neodymium-iron-boron magnet material comprises the following components by mass content: R: 29.5-32.6%; R comprising R1 and R2, R1 comprising Nd and Dy, R1 being rare earth element added during smelting, the content of R2 being 0.2-0.9%, R2 comprising Tb, and R2 being rare earth element added during grain boundary diffusion; M: 0.35% or less, but not 0, M is one or more of Zn, Ga and Bi; Cu: 0.05-0.15%; B: 0.97-1.05%; Fe: 65-69.5%, the raw material composition does not comprise Co; the percentage is the mass percentage of the mass of each component relative to the total mass of the raw material composition;
or, the raw material composition of the neodymium-iron-boron magnet material comprises the following components by mass content: R: 29.5-31%; R comprising R1 and R2, R1 comprising Nd and Dy, and R1 being rare earth element added during smelting, the content of R2 being 0.2-0.8%, R2 comprising Tb, and R2 being rare earth element added during grain boundary diffusion; M: 0.1-0.35%, M being one or more of Zn, Ga and Bi; Cu: 0.08% or less, but not 0; B: 0.97-1.05%; Fe: 65-69.5%, the raw material composition does not comprise Co; the percentage is the mass percentage of the mass of each component relative to the total mass of the raw material composition.

4. A preparation method for neodymium-iron-boron magnet material, which is carried out by using the raw material composition according to any one of claims 1-3, and the preparation method is a preparation method with diffusion, wherein, R1 elements are added in smelting step, and R2 elements are added in grain boundary diffusion step.

5. The preparation method according to claim 4, wherein, the preparation method comprises the following steps: subjecting the elements other than R2 in the raw material composition of the neodymium-iron-boron magnet material to
smelting,
powdering,
forming,
sintering to obtain a sintered body,
and then subjecting the mixture of the sintered body and R2 to the grain boundary diffusion;
wherein, the operation of smelting is preferably to smelt and cast the elements other than R2 in the neodymium-iron-boron magnet material by using ingot casting process and quick-setting flake process to obtain alloy flakes;
the temperature of the smelting is preferably 1300-1700°C, more preferably 1450-1550°C;
wherein, the powdering preferably comprises hydrogen decrepitation powdering and/or jet milling powdering;
the hydrogen decrepitation powdering preferably comprises hydrogen absorption, dehydrogenation and cooling treatment; the temperature of the hydrogen absorption is preferably 20-200°C; the temperature of the dehydrogenation is preferably 400-650°C, more preferably 500-550°C; the pressure of the hydrogen absorption is preferably 50-600 kPa;
the jet milling powdering is preferably carried out under the condition of 0.1-2 MPa, more preferably 0.5-0.7MPa; the airflow in the jet milling powdering is preferably nitrogen; the time of the jet milling powdering is preferably 2-4h;
wherein, the forming is preferably a magnetic field forming method, and the magnetic field strength of the magnetic field forming method is 1.5T or more;
wherein, the sintering is preferably carried out under the condition that the degree of vacuum is lower than 0.5Pa;
the temperature of sintering is preferably 1000-1200°C, more preferably 1030-1090°C;
the time of sintering is preferably 0.5-10h, more preferably 2-5h;
wherein, the coating operation of R2 is preferably comprised before the grain boundary diffusion;
R2 is preferably coated in the form of fluoride or alloy with low melting point, such as fluoride of Tb; when Dy is also comprised, preferably, Dy is coated in the form of fluoride of Dy;
when Pr is also comprised, preferably, Pr is added in the form of a PrCu alloy;
when R2 comprises Pr and Pr participates in grain boundary diffusion in the form of a PrCu alloy, preferably, in the PrCu alloy, the mass ratio of Cu to the PrCu alloy is preferably 0.1-17%; preferably, the timing of adding Cu in the preparation method is the step of grain boundary diffusion, or Cu is simultaneously added in the step of smelting and the step of grain boundary diffusion;
wherein, the temperature of the grain boundary diffusion is preferably 800-1000°C;
the time of the grain boundary diffusion is preferably 5-20h, more preferably 5-15h;
wherein, after the grain boundary diffusion, a low-temperature tempering treatment is preferably performed; the temperature of the low-temperature tempering treatment is preferably 460-560°C; and the time of the low-temperature tempering treatment is preferably 1-3h.

6. A neodymium-iron-boron magnet material made by the preparation method according to claim 4 or 5.

7. A neodymium-iron-boron magnet material, comprising the following components by mass content: R: 28-33%; R comprising R1 and R2, R1 comprising Nd and Dy, and R2 comprising Tb; the content of R2 being 0.2%-1%;
M: ≤0.4%, but not 0, M being one or more of Bi, Sn, Zn, Ga, In, Au and Pb;
Cu: ≤0.15%, but not 0;
B: 0.9-1.1%;
Fe: 60-70%;
the neodymium-iron-boron magnet material does not comprise Co; the percentage is the mass percentage of the mass of each component relative to the total mass of the neodymium-iron-boron magnet material;
the neodymium-iron-boron magnet material comprises Nd₂Feₗ₄B grains and their shells, a two-grain grain boundary and a grain boundary triangle region adjacent to the Nd₂Fe₁₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2-3.12%; the grain boundary continuity of the two-grain grain boundary is 96% or more; the mass ratio of C and O in the grain boundary triangle region is 0.4-0.5%, and the mass ratio of C and O in the two-grain grain boundary is 0.3-0.4%.

8. The neodymium-iron-boron magnet material according to claim 7, wherein, the area ratio of the grain boundary triangle region is 2.07-2.84%, preferably 2.07-2.6%;
and/or, the grain boundary continuity is 97% or more, preferably 98% or more;
and/or, the mass ratio of C and O in the grain boundary triangle region is 0.41-0.48%, preferably 0.41-0.46%;
and/or, the mass ratio of C and O in the two-grain grain boundary is 0.32-0.39%, preferably 0.34-0.39%;
and/or, the two-grain grain boundary also comprises a phase with a chemical composition of RₓFe_{100-x-y-z}Cu_{y}M_{z}; wherein R comprises one or more of Nd, Dy and Tb, and M is one or more of Bi, Sn, Zn, Ga, In, Au and Pb, x is 78-80; y is 0.8-1.5; z is 0.1 or less, but not 0; wherein, x is preferably 78.1-79.5, y is preferably 0.99-1.33, and z is preferably 0.26-0.38;
wherein, in the two-grain grain boundary, the ratio of the area of the new phase to the total area of the two-grain grain boundary is preferably 0.25-1.65%, more preferably 0.5-1.65%;
and/or, in the neodymium-iron-boron magnet material, the content of R is 29.5-32.6%, preferably 29.5-31%, and the percentage is the mass percentage relative to the total mass of the neodymium-iron-boron magnet material;
and/or, in R1 of the neodymium-iron-boron magnet material, the content of Nd is 28.5-32.5%, preferably 28.5-31%, and the percentage is the mass percentage relative to the total mass of the neodymium-iron-boron magnet material;
and/or, in R1 of the neodymium-iron-boron magnet material, the content of Dy is 0.3% or less, but not 0, preferably 0.05-0.2%, and the percentage is the mass percentage relative to the total mass of the neodymium-iron-boron magnet material;
and/or, R1 also comprises one or more of Pr, Ho, Tb, Gd and Y;
wherein, when R1 comprises Pr, Pr is added preferably in the form of PrNd, or in the form of a mixture of pure Pr and pure Nd, or added in a combination of "a mixture of PrNd, pure Pr and pure Nd"; when added in the form of PrNd, Pr:Nd is preferably 25:75 or 20:80; when added in the form of a mixture of pure Pr and Nd or a combination of a mixture of PrNd, pure Pr and Nd, the content of Pr is preferably 0.1-2wt%, wherein the percentage is the mass percentage relative to the total mass of the neodymium-iron-boron magnet material;
wherein, when R1 comprises Ho, the content of Ho is preferably 0.1-0.2%, and the percentage is the mass percentage relative to the total mass of the neodymium-iron-boron magnet material;
wherein, when R1 comprises Gd, the content of Gd is preferably 0.1-0.2%, and the percentage is the mass percentage relative to the total mass of the neodymium-iron-boron magnet material;
wherein, when R1 comprises Y, the content of Y is preferably 0.1-0.2%, and the percentage is the mass percentage relative to the total mass of the neodymium-iron-boron magnet material;
and/or, the content of R2 is 0.2-0.9%, and the percentage is the mass percentage relative to the total mass of the neodymium-iron-boron magnet material;
and/or, in R2, the content of Tb is 0.2%-1%, preferably 0.5-1%, and the percentage is the mass percentage relative to the total mass of the neodymium-iron-boron magnet material;
and/or, in the neodymium-iron-boron magnet material, R2 also comprises Pr and/or Dy;
wherein, when R2 comprises Pr, the content of Pr is preferably 0.2% or less, but not 0, and the percentage is the mass percentage relative to the total mass of the neodymium-iron-boron magnet material;
wherein, when R2 comprises Dy, the content of Dy is preferably 0.3% or less, but not 0, and the percentage is the mass percentage relative to the total mass of the neodymium-iron-boron magnet material;
and/or, the content of M is 0.35% or less, but not 0, preferably 0.01-0.35%, and the percentage is the mass percentage relative to the total mass of the neodymium-iron-boron magnet material;
and/or, the kind of M is one or more of Zn, Ga and Bi;
wherein, when M comprises Ga, the content of Ga is preferably 0.35% or less, but not 0, more preferably 0.1-0.35%, and the percentage is the mass percentage relative to the total mass of the neodymium-iron-boron magnet material;
wherein, when M comprises Zn, the content of Zn is preferably 0.35% or less, but not 0, more preferably 0.05-0.25%, and the percentage is the mass percentage relative to the total mass of the neodymium-iron-boron magnet material;
wherein, when M comprises Bi, the content of Bi is preferably 0.35% or less, but not 0, more preferably 0.05-0.15%, and the percentage is the mass percentage relative to the total mass of the neodymium-iron-boron magnet material;
and/or, the content of Cu is 0.03-0.15%, or, the content of Cu is 0.08% or less, but not 0, and the percentage is the mass percentage relative to the total mass of the neodymium-iron-boron magnet material;
and/or, the addition means of Cu comprises being added during smelting and/or being added during grain boundary diffusion;
wherein, when Cu is added during grain boundary diffusion, the content of Cu added during the grain boundary diffusion is preferably 0.03-0.15%, and the percentage is the mass percentage relative to the total mass of the neodymium-iron-boron magnet material; when Cu is added during grain boundary diffusion, Cu is preferably added in the form of a PrCu alloy; wherein the mass percentage of Cu relative to the PrCu is preferably 0.1-17%;
and/or, the content of B is 0.97-1.05%, and the percentage is the mass percentage relative to the total mass of the neodymium-iron-boron magnet material;
and/or, the content of Fe is 65-69.5%, and the percentage is the mass percentage relative to the total mass of the neodymium-iron-boron magnet material;
and/or, the neodymium-iron-boron magnet material also comprises Al; the content of Al is preferably 0.3% or less, but not 0, more preferably 0.03-0.2%, and the percentage is the mass percentage relative to the total mass of the neodymium-iron-boron magnet material;
wherein, when M comprises Ga, and Ga≤0.01%, preferably, in the composition of M elements, Al+Ga+Cu≤0.11%, and the percentage is the mass percentage relative to the total mass of the neodymium-iron-boron magnet material.

9. The neodymium-iron-boron magnet material according to claim 7 or 8, wherein, the neodymium-iron-boron magnet material comprises the following components by mass content: R: 29.5-32.6%; R comprising R1 and R2 , R1 comprising Nd and Dy, R1 being rare earth element added during smelting, the content of R2 being 0.2-0.9%, R2 comprising Tb, and R2 being rare earth element added during grain boundary diffusion; M: 0.35% or less, but not 0, M is one or more of Zn, Ga and Bi; Cu: 0.05-0.15%; B: 0.97-1.05%; Fe: 65-69.5%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Feₗ₄B grains and their shells, a two-grain grain boundary and a grain boundary triangle region adjacent to the Nd₂Feₗ₄B grains, wherein the heavy rare earth elements in R1 are distributed in the Nd₂Feₗ₄B grains, and R2 is mainly distributed in the shells, the two-grain grain boundary and the grain boundary triangle region, the area ratio of the grain boundary triangle region is 2-2.84%; the grain boundary continuity of the two-grain grain boundary is 97% or more; the mass ratio of C and O in the triangle region is 0.41-0.48%, and the mass ratio of C and O in the two-grain grain boundary is 0.32-0.39%; the two-grain grain boundary also comprises a new phase, the chemical composition of the new phase is RₓFe_{100-x-y-z}Cu_{y}M_{z}; wherein, R in the RₓFe_{100-x-y-z}Cu_{y}M_{z} comprises one or more of Nd, Dy and Tb, and M is one or more of Bi, Sn, Zn, Ga, In, Au and Pb, x is 78.1-79.5; y is 0.99-1.33; z is 0.26-0.38; the ratio of the area of the new phase in the two-grain grain boundary to the total area of the two-grain grain boundary is 0.25-1.65%;
or, the neodymium-iron-boron magnet material comprises the following components by mass content: R: 29.5-31%; R comprising R1 and R2, R1 comprising Nd and Dy, R1 being rare earth element added during smelting, the content of R2 being 0.2-0.8%, R2 comprising Tb, and R2 being rare earth element added during grain boundary diffusion; M: 0.01-0.35%, M being one of Zn, Ga and Bi; Cu: 0.08% or less, but not 0; B: 0.97-1.05%; Fe: 65-69.5%, the neodymium-iron-boron magnet material does not comprise Co; the percentage is the mass percentage of the mass of each component relative to the total mass of the neodymium-iron-boron magnet material; the neodymium-iron-boron magnet material comprises Nd₂Fe₁₄B grains and their shells, a two-grain grain boundary and a grain boundary triangle region adjacent to the Nd₂Fe₁₄B grains, wherein the heavy rare earth elements in R1 are distributed in the Nd₂Fe₁₄B grains, and R2 is mainly distributed in the shells, the two-grain grain boundary and the grain boundary triangle region, the area ratio of the grain boundary triangle region is 2-2.6%; the grain boundary continuity of the two-grain grain boundary is 98% or more; the mass ratio of C and O in the triangle region is 0.41-0.46%, and the mass ratio of C and O in the two-grain grain boundary is 0.32-0.39%; the two-grain grain boundary comprises a new phase, the chemical composition of the new phase is RₓFe_{100-x-y-z}Cu_{y}M_{z}; wherein, R in the RₓFe_{100-x-y-z}Cu_{y}M_{z} comprises one or more of Nd, Dy and Tb, and M is one or more of Bi, Zn and Ga; x is 78.1-79.5; y is 0.99-1.33; z is 0.26-0.38; the ratio of the area of the new phase in the two-grain grain boundary to the total area of the two-grain grain boundary is 0.5-1.65%.

10. A use of the neodymium-iron-boron magnet material according to any one of claims 6-9 in the preparation of magnetic steel; the magnetic steel is preferably high-performance magnetic steel of 54SH, 54UH, 56SH.
